# EUROPEAN PATENT APPLICATION

(11) **EP 1 416 093 A1**
(43) Date of publication of application: **06.05.2004**
(21) Application number: 03078384.9
(22) Date of filing: 28.10.2003
(51) Int. Cl.: E02B 15/04

(54) **Device for removing oil from a liquid**

(30) Priority: 31.10.2002 BE 200200623
(71) Applicant: Flirok, Besloten Vennootschap Met Beperkte Aansprakelijkheid, 3640 Kinrooi (BE)
(72) Inventor: Dabekaussen, Fac, 3640 Kinrooi (BE)
(74) Representative: Donné, Eddy

(57) **Abstract**

Device for removing oil (1) from a liquid (2), which mainly consists of an endless cord (3) which is at least partly immerged in the liquid (2) to be treated; drive means (4) for said cord (3); means (8) for skimming the cord (3), characterised in that they also comprise means (7) for statically loading the cord (3).

## Description

The present invention concerns a device for removing oil from a liquid.

In particular, the invention aims to remove oil from a liquid tank or the like contaminated with oil, or to remove an oil film floating on the water surface of a watercourse, lake, sea or the like, and which was for example created due to an either or not accidental oil discharge or due to a possible ship wreck of an oil tanker or the like.

It is known that the presence of oil in watercourses or the like is very harmful to the environment and that its negative effects on the flora and fauna are greater as the oil stays longer in the water, especially as the oil film further expands over a larger surface in the course of time, and thus can form a serious threat for the pollution of banks, shores, beaches and the like.

In order to somewhat restrict these negative effects, it is important to act very fast and to clear up the oil film as quickly and as thoroughly as possible.

A known technique for clearing an oil film in a watercourse or the like consists in first diking in the oil film as much as possible, for example by means of floating dam elements, in order to prevent the polluted zone from expanding, and by subsequently skimming the floating oil layer from the dammed zone to be further discharged and processed.

A disadvantage of such a technique is that it is expensive and time-consuming, among others due to the use of expensive and complex machines.

Another disadvantage is that skimming the floating oil layer is practically impossible without also scooping water, especially in the case of loppy water. This implies that the scooped mixture of oil and water will require subsequent treatment for the further separation of oil and water, which makes this known technique even more expensive.

Another disadvantage of this technique is that under certain circumstances, for example in the case where oil has been discharged along a rugged, rocky coastline or in the case of a discharge in a covered watercourse, sewerage or the like, the known machines cannot be used, among others due to their size or because the work site is not accessible enough. In this case, the gunk has to be cleared by means of manpower, which of course makes the clearing costs rise considerably.

Another known technique consists in treating the oil film with chemical products, as a result of which the oil is disintegrated and compounds are created which are less harmful to the environment and which dissolve in water.

A disadvantage of this technique is that the formed compounds, although they are less harmful than oil, nonetheless still form a heavy burdening for the environment, and that nature, after the above-mentioned treatment with chemical products, still requires quite some time to recover.

Another disadvantage is that the aforesaid chemical products are expensive and that large amounts are required, and that said known technique consequently is less appropriate for the treatment of large oil slicks.

Another known technique makes use of an endless cord which is partly immersed in the liquid to be treated. Drive means provide for a continuous movement of said cord. Means are also provided which skim off the cord and lead the recycled oil to a reservoir.

A disadvantage of the latter technique is that the cord only attracts oil on the basis of molecular adhesion. However, the range of such molecular forces is restricted, as a result of which the mutual forces of attraction between the cord and the oil are in turn restricted.

The present invention aims to remedy the above-mentioned and other disadvantages by providing a device which makes it possible to remove oil from water in a simple, efficient and cheap manner, also in places which are not easily accessible, whereby said device can also be applied with the same efficiency in loppy water, and whereby the forces of attraction between the cord and the oil are large.

To this end, the invention concerns a device for removing oil from a liquid, whereby this device mainly consists of an endless cord which is at least partly immerged in the liquid to be treated; drive means for said cord; and means for skimming the cord and means for statically loading the cord.

Before the cord is brought into contact with the liquid to be treated, it is statically loaded. When the cord is then brought into contact with the liquid to be treated, the oil is strongly attracted and retained by the cord.

While the cord is being driven, the attracted oil is carried along by the cord and removed from the water, such that the oil which has been carried along can be skimmed from the cord in a part where the cord protrudes above the water, and the skimmed oil can subsequently be collected and discharged.

Such a device according to the invention is very simple and cheap to realise, and it is moreover very efficient to use.

Moreover, the cord can be easily provided in narrow crevices in rocks or in covered watercourses, there where other techniques for removing oil fail.

In order to better explain the characteristics of the invention, the following preferred embodiment of a device according to the invention is described as an example only without being limitative in any way, with reference to the accompanying drawings, in which:
figure 1 schematically represents a device according to the invention;
figure 2 is a view in perspective of a practical embodiment of a device according to the invention;
figure 3 represents the part represented by F3 in figure 2 to a larger scale;
figure 4 represents a section according to line IV-IV in figure 2;
figures 5 and 6 represent sections according to lines V-V and VI-VI respectively in figure 3.

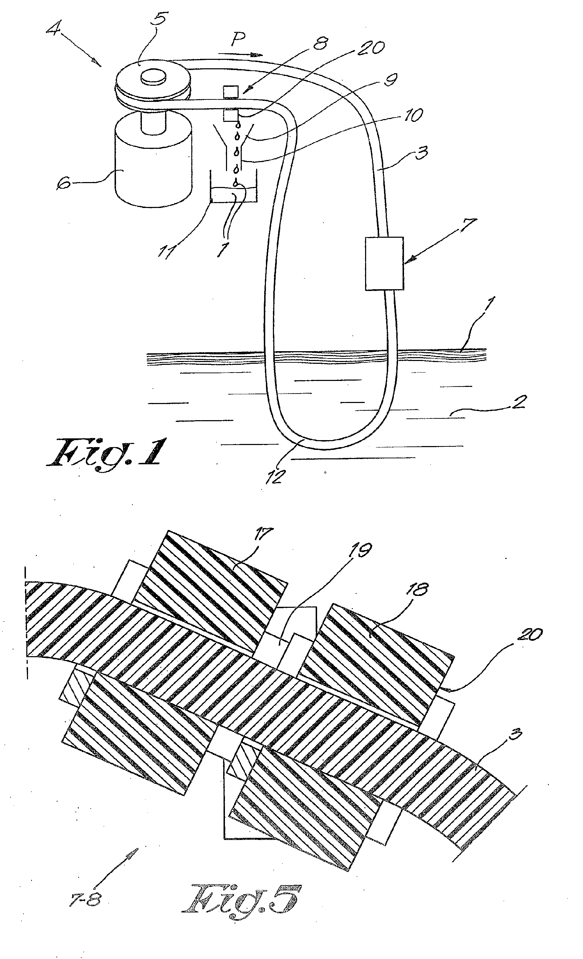

Figure 1 represents a device according to the invention for removing oil 1 from a liquid 2 in a very schematic manner.

This device mainly consists of an endless cord 3; drive means 4, for example in the shape of a pulley 5 over which said cord 3 is guided and which is provided on the shaft of a motor 6; means 7 for statically loading the cord 3; means 8 for skimming the cord 3; and finally means for collecting the removed oil 1, for example in the shape of a funnel 9 with drain pipe 10, whereby this funnel 9 is provided under the aforesaid means 8 for skimming the cord 3, and whereby the drain pipe 10 can open into a recipient 11.

The cord 3 is preferably at least partially made of silicones, such that at least the outer surface consists of silicones. The cord 3 is preferably even made entirely of silicones.

The working of the device is very simple and as follows.

In order to remove the oil 1 from the liquid 2, as represented in figure 1, the lower free part 12 of the cord 3 is suspended in the oil 1 and in the liquid 2, and the above-mentioned drive means 4 are activated in order to move the cord 3 in its longitudinal direction in the direction of the arrow P in figure 1.

As the cord 3 is made endless, every part of the cord 3 will alternately cover a distance in and out of the liquid 2.

When the cord 3 passes by the means 7, the cord 3 is statically loaded locally with static electricity. When this statically loaded part of the cord 3 is moved through the liquid 2, the oil 1 which is present in the liquid 2 is attracted by the cord 3 and retained on its outer surface like an oil film, while the liquid 2 itself is left as it is.

Thanks to the movement of the cord 3, the oil 1 is carried along on the outer surface of the cord 3 and removed from the liquid 2.

At the height of the means 8, the oil 1 is skimmed from the cord 3 and the skimmed-off oil 1 is collected in the funnel 9 and accumulated in the recipient 11.

In this manner, the oil 1 is removed from the liquid 2 and discharged in a continuous manner.

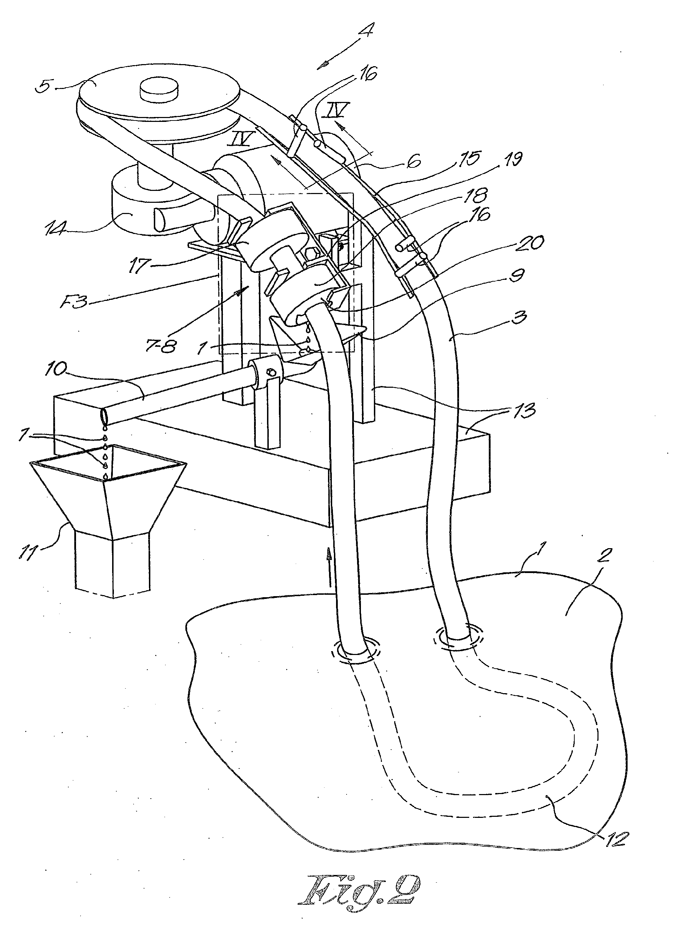

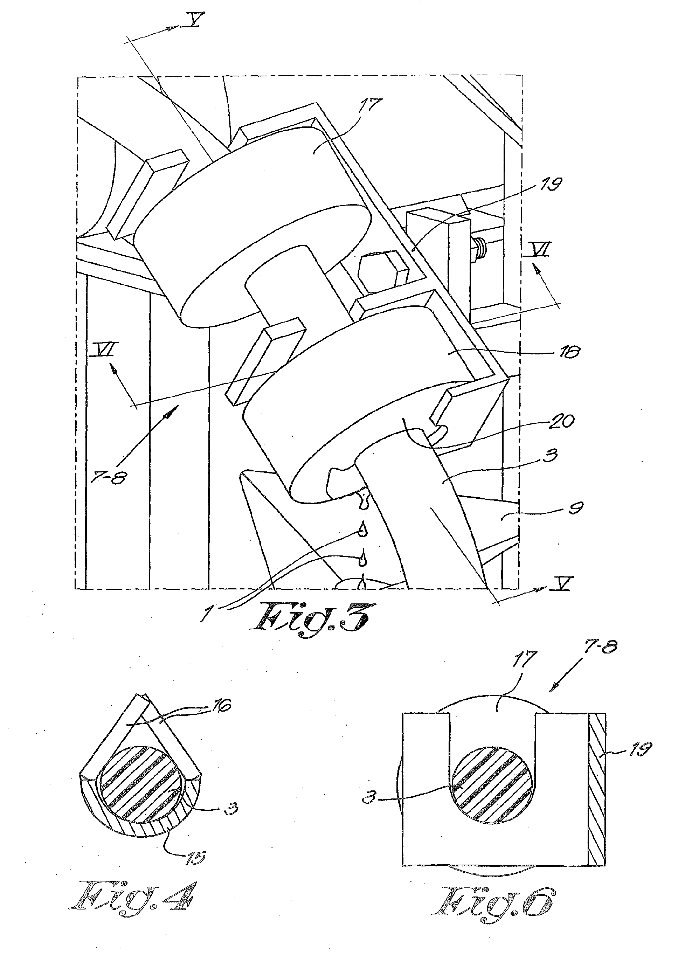

A practical embodiment, represented in figures 2 to 6, mainly comprises the same elements with the same reference figures as in the discussed device, whereby these elements are provided on a common basis 13.

In this practical embodiment, the drive means 4 comprise a transmission 14 situated between the pulley 5 and the motor 6, and the device is additionally provided with means for guiding the cord 3, whereby these means preferably consist of a groove 15 equipped with pens 16 provided in a slanting manner over the part of the cord 3 which extends in the groove 15.

The means 7 for statically loading the cord 3 as well as the means 8 for skimming the cord 3 are formed of rings in this practical embodiment, 17 and 18 respectively, preferably made of rubber, whereby these rings are erected slantingly and are provided at a distance from each other around the cord 3, and whereby they are retained by means of a support 19 fixed to the base 13.

The working of this device is analogous to that of the device from figure 1.

When the cord 3 passes through the rings 17 and 18, the cord 3 is statically loaded because of the friction between the cord 3 and the rings 17 and 18.

When the cord 3 is moved through the ring 18, the oil 1 which is carried along by the cord 3 is skimmed from the cord 3, and the skimmed-off oil 1 runs down along the bottom surface 20 of the ring 17 and subsequently drips off the ring 18 in the funnel 9 situated beneath it.

It is clear that the rings 17 and 18 can be made as a common element in one piece which combines the two functions of skimming and of statically loading the cord 3.

It is also clear that the rings 17 and 18 can be composed of several rings provided against each other.

Naturally, the means 7 for statically loading the cord 3 can also be realised in another manner without any contact between the cord 3 and said means 7 being necessarily required.

The invention is by no means limited to the above-described embodiment given as an example and represented in the accompanying drawings; on the contrary, such a device according to the invention can be made in all sorts of shapes and dimensions while still remaining within the scope of the invention.

## Claims

1. Device for removing oil (1) from a liquid (2), which mainly consists of an endless cord (3) which is at least partly immerged in the liquid (2) to be treated; drive means (4) for said cord (3); means (8) for skimming the cord (3), **characterised in that** they also comprise means (7) for statically loading the cord (3).

2. Device according to claim 1, **characterised in that** the above-mentioned cord (3) is at least partially made of silicones.

3. Device according to claim 2, **characterised in that** the cord (3) is entirely made of silicones.

4. Device according to claim 1, **characterised in that** the drive means (4) consist of a pulley (5) over which the above-mentioned cord (3) is guided and which is coupled to a motor (6).

5. Device according to claim 1, **characterised in that** the above-mentioned means (7) for statically loading the cord (3) consist of one or several rings (17-18) which are provided in a support (19), whereby these rings (17-18) are provided around the cord (3) and make contact with the latter.

6. Device according to claim 5, **characterised in that** at least one ring (17-18) for statically loading the cord (3) is made of rubber.

7. Device according to claim 1, **characterised in that** the above-mentioned means (8) for skimming the cord (3) are formed of one or several rings (17-18) provided in a support (19) and which are arranged around the cord (3).

8. Device according to claim 7, **characterised in that** at least one ring (18) for skimming the cord (3) is erected slantingly.

9. Device according to claim 7 or 8, **characterised in that** at least one ring (18) for skimming the cord (3) is made of rubber.

10. Device according to any of the preceding claims, **characterised in that** it comprises means for collecting the oil (1) removed from the liquid (2), whereby these means are provided under the above-mentioned means (8) for skimming the cord (3).

11. Device according to claim 1, **characterised in that** it is provided with means (14) for guiding the cord (3) at least over a part of its length.

12. Device according to claim 9, **characterised in that** pens (15) are provided over the aforesaid means (14) for guiding the cord (3) which extend over the cord (3).
